# EUROPÄISCHE PATENTSCHRIFT

(11) **EP 1 774 754 B1**
(45) Veröffentlichungstag und Bekanntmachung des Hinweises auf die Patenterteilung: **06.02.2019**
(21) Anmeldenummer: 05769932.4
(22) Anmeldetag: 22.06.2005
(51) Int. Cl.: H04L 29/12, H04W 8/26, H04L 12/28, H04W 74/00, H04W 84/12

(54) **MOBILES KOMMUNIKATIONSENDGERÄT ZUR VERWENDUNG IN MEHREREN DRAHTLOSEN LOKALEN NETZWERKEN UND VERFAHREN ZUM BETRIEB DESSELBEN**
MOBILE COMMUNICATIONS TERMINAL FOR USE IN SEVERAL WIRELESS LOCAL NETWORKS AND METHOD FOR OPERATING SAID TERMINAL
TERMINAL DE COMMUNICATION MOBILE POUR UNE UTILISATION DANS PLUSIEURS RESEAUX LOCAUX SANS FIL ET MODES DE FONCTIONNEMENT ASSOCIES

(30) Priorität: 04.08.2004 DE 102004037839
(43) Veröffentlichungstag der Anmeldung: 18.04.2007
(73) Patentinhaber: Siemens Aktiengesellschaft, 80333 München (DE)
(72) Erfinder: GRIMMINGER, Jochen, 93055 München (DE); GRÖTING, Wolfgang, 46149 Oberhausen (DE); SCHIELEIN, Michael, 80997 München (DE); SURTEES, Abigail, SO51 Romsey Hampshire (GB)
(86) Internationale Anmeldenummer: PCT/EP2005/052909
(87) Internationale Veröffentlichungsnummer: WO 2006/015902

(56) Entgegenhaltungen:
- DE-A1- 10 211 575
- US-A1- 2002 154 627
- US-B1- 6 708 033
- US-B1- 6 763 012
- WEI XING, HOLGER KAHL, ADAM WOLISZ: "M-SCTP: Design and Prototypical Implementation of an End-To-End Mobility Concept" PROC. 5TH INTL. WORKSHOP ON INTERNET CHALLENGE: TECHNOLOGY AND APPLICATIONS, [Online] 1. Oktober 2002 (2002-10-01), - 1. Oktober 2002 (2002-10-01) Seiten 1-8, XP002350786 Berlin Gefunden im Internet: URL:http://www.tkn.tu-berlin.de/publicatio ns/papers/msctp-h-2.pdf> [gefunden am 2005-10-24]

## Beschreibung

Die Erfindung bezieht sich auf ein mobiles Kommunikationsendgerät zur Verwendung in einer Mehrzahl drahtloser lokaler Netzwerke sowie ein Verfahren, insbesondere Anmeldungsverfahren, dafür.

Im Stand der Technik ist ein sog. "DHCP"-Server bekannt. Aufgabe dieses Servers ist es, mobilen Kommunikationsendgeräten, die einen Zugang zu einem drahtlosen lokalen Netzwerk nachsuchen, eine üblicherweise temporäre Zugangsadresse für dieses Netzwerk zuzuweisen, wobei solche Zugangsadressen allgemein als "IP-Adressen" bezeichnet werden, sofern für die Kommunikationsverbindungen das zugehörige IP-Protokoll verwendet wird.

Ein bekanntes mobiles Kommunikationsendgerät weist einen gesonderten Speicher für die jeweils letzte, ihm zugewiesene Zugangsadresse für ein bestimmtes drahtloses lokales Netzwerk auf. Diese letzte Zugangsadresse ist somit daran geknüpft, in welchem der Mehrzahl drahtloser lokaler Netzwerke sich das mobile Kommunikationsendgerät zuletzt angemeldet hat. Die verwenden zuletzt genutzter Zugangsadressen ist auch aus WIE XING, HOLGER KAHL, ADAM WOLICZ: "M-SCTP: DESIGN AND PROTOTYPICAL IMPLEMENTATION OF AN END-TO-END MOBILITY CONCEPT" PROC. 5TH INT. WORKSHOP ON INTERNET CHALLENGE: TECHNOLOGY AND APPLICATIONS, 1.Oktober 2002, Seiten 1-8, (www-tkn.ee.tu-berlin.de/publications/papers/msctp-h-2.pdf) bekannt.

Bei einem solchen mobilen Kommunikationsendgerät wird es als nachteilig angesehen, dass für jede neue Nachfrage für einen Zugang zu einem drahtlosen lokalen Netzwerk die Kommunikationsverbindung neu aufgebaut werden muss, wobei jeweils von dem Server eine neue Zugangsadresse zu vergeben ist. Einzige Ausnahme ist es, wenn das mobile Kommunikationsendgerät in zwei aufeinander folgenden Sitzungen ein- und dasselbe drahtlose lokale Netzwerk nachfragt. In diesem Fall kann das mobile Kommunikationsendgerät innerhalb eines Anmeldevorgangs bei dem DHCP-Server die aus dem Anmelde-Speicher ausgelesene letzte IP-Adresse als Zugangsadresse aussenden, wonach der DHCP-Server prüft, ob er für das nachgesuchte Netzwerk, zu dem er gehört, dem mobilen Kommunikationsendgerät die bereits früher benutzte Zugangsadresse zuweisen kann. Ist diese Zugangsadresse frei, kann die neue Kommunikationsverbindung zu dem nachgesuchten Netzwerk unter derselben Zugangsadresse erfolgen.

Ausgehend hiervon liegt der Erfindung die Aufgabe zugrunde, ein mobiles Kommunikationsendgerät zur Verwendung in einer Mehrzahl drahtloser lokaler Netzwerke sowie ein zum Betrieb desselben geeignetes Verfahren anzugeben, bei denen der Aufbau von Kommunikationsverbindungen in unterschiedlichen drahtlosen lokalen Netzwerken vereinfacht ist.

Diese Aufgabe wird bei dem mobilen Kommunikationsendgerät der eingangs genannten Art dadurch gelöst, dass in einem Zuordnungs-Speicher des mobilen Kommunikationsendgerätes Informationen darüber gespeichert sind, welche Zugangsadressen das mobile Kommunikationsendgerät in welchem der Mehrzahl drahtloser lokaler Netzwerke bei früheren Anmeldevorgängen erhalten hat, es derart ausgebildet ist, dass es aufgrund einer neuen Zugangsanfrage zu einem nachgesuchten Netzwerk aus der Mehrzahl drahtloser lokaler Netzwerke nach einer ihm erteilten früheren Zugangsadresse für das nachgesuchte Netzwerk sucht, und es derart ausgebildet ist, dass es bei Auffinden der früheren Zugangsadresse für das nachgesuchte Netzwerk diese in den Anmeldungs-Speicher schreibt und für einen Anmeldevorgang aussendet.

Aufgrund der Maßnahme, dass in dem Zuordnungs-Speicher des mobilen Kommunikationsendgerätes frühere, vergebene Zugangsadressen gespeichert werden, und zwar in Kombination mit dem zugehörigen drahtlosen Netzwerk, wird der Aufbau einer Kommunikationsverbindung zu dem bereits früher angewählten Netzwerk erheblich vereinfacht. Es wird nämlich ermöglicht, dass das mobile Kommunikationsendgerät die frühere Zugangsadresse für das nachgesuchte Netzwerk in seinem Zuordnungs-Speicher auffindet und dieselbe Zugangsadresse für den neuen Anmeldevorgang an demselben drahtlosen lokalen Netzwerk verwendet. Insofern entfällt jeglicher zusätzlicher Aufwand für die Einrichtung der Kommunikationsverbindung, der an die Vergabe einer neuen Zugangsadresse geknüpft ist.

Bevorzugt ist das mobile Kommunikationsendgerät derart ausgebildet, dass es in dem Fall, wenn eine Zugangsadresse für eines der Mehrzahl drahtloser lokaler Netzwerke ungültig wird, von dem der Zugangsadresse zugehörigen drahtlosen lokalen Netzwerk eine neue Zugangsadresse anfordert. Dies bedeutet, dass das mobile Kommunikationsendgerät für bereits frühere angewählte drahtlose lokale Netzwerke immer über eine dem mobilen Kommunikationsendgerät zugeordnete gültige Zugangsadresse verfügt. Insofern ist es möglich, dass in dem Fall, wenn eine zunächst erteilte Zugangsadresse im Lauf einer Sitzung innerhalb eines der Mehrzahl drahtloser lokaler Netzwerke ungültig wird, auf die neue Zugangsadresse umgeschaltet wird, ohne dass eine Unterbrechung der Sitzung erforderlich wird. Dies bedeutet, dass der Benutzer des mobilen Kommunikationsendgerätes den Übergang von der alten zu der neuen Zugangsadresse bei der Durchführung seiner Sitzung in dem drahtlosen lokalen Netzwerk nicht wahrnimmt.

Das mobile Kommunikationsendgerät kann als so genanntes "Multimode"-Gerät ausgestattet sein. In diesem Fall verfügt es über eine Mehrzahl von Luftschnittstellen, die jeweils mit einem der Mehrzahl drahtloser lokaler Netzwerke eine Kommunikationsverbindung unterhalten können. Mit Hilfe der in dem Zuordnungs-Speicher enthaltenen Informationen ist ein einfaches Umschalten zwischen den einzelnen Luftschnittstellen möglich. Selbstverständlich ist die Erfindung jedoch auch bei so genannten "Singlemode"-Kommunikationsendgeräten einsetzbar, bei denen eine einzige Luftschnittstelle, beispielsweise eine WLAN-Schnittstelle, vorgesehen ist.

Das mobile Kommunikationsendgerät kann als DHCP-Client ausgebildet sein, wobei der Anmeldungs-Speicher eine letzte von einem der Mehrzahl drahtloser lokaler Netzwerke an das mobile Kommunikationsendgerät vergebene Zugangsadresse enthält, sowie durch die frühere Zugangsadresse des nachgefragten drahtlosen lokalen Netzwerks überschreibbar ist. Bei dieser Ausführungsform wird auf die Ausbildung von bekannten mobilen Kommunikationsendgeräten zurückgegriffen, bei denen dieser gesonderte Speicher mit der letzten vergebenen Zugangsadresse vorgesehen ist. Aufgrund der Ausbildung des mobilen Kommunikationsendgerätes nach der Erfindung kommt das Merkmal hinzu, dass die letzte an das mobile Kommunikationsendgerät vergebene Zugangsadresse durch eine Zugangsadresse überschriebenen werden kann, die aus dem Speicher für frühere Kommunikationsverbindungen ausgelesen wird.

Notwendiger Bestandteil des Inhalts des Speichers für früher benutzte Zugangsadressen zu den drahtlosen lokalen Netzwerken, die früher angewählt worden sind, ist die Zugangsadresse. Selbstverständlich können weitere Informationen in Relation zu der Zugangsadresse auf dem Server gespeichert sein. Bevorzugt sind dies Sicherheits- oder Authentifizierungsinformationen, die für die Inanspruchnahme bestimmter Dienste der drahtlosen lokalen Netzwerke erforderlich sind.

Zur Vereinfachung des Auffindens einer für ein nachgesuchtes drahtloses lokales Netzwerk früher vergebenden Zugangsadresse kann diese Zugangsadresse in dem Zuordnungs-Speicher in Kombination mit einer Ortsinformation oder einer anderen geeigneten, das früher nachgesuchte drahtlose lokale Netzwerk wiedergebenden Information gespeichert sein. Bei einem WLAN-Netzwerk sind solche Informationen bevorzugt die "SSID" oder die "MAC"-Adresse des betreffenden drahtlosen lokalen Netzwerks.

Die oben genannte Aufgabe wird hinsichtlich des Verfahrens gelöst durch ein Verfahren zum Verwalten von Anmeldungsinformationen bei einem mobilen Kommunikationsendgerät zum Aufbau von Kommunikationsverbindungen in einer Mehrzahl drahtloser lokaler Netzwerke, wobei für einen neuen Anmeldungsvorgang aus einem Anmeldungs-Speicher eine Zugangsadresse ausgelesen wird, wobei in einem Zuordnungs-Speicher des mobilen Kommunikationsendgerätes Informationen darüber gespeichert werden, welche Zugangsadressen das mobile Kommunikationsendgerät in welchem der Mehrzahl drahtloser lokaler Netzwerke bei früheren Anmeldevorgängen erhalten hat, das mobile Kommunikationsendgerät aufgrund einer neuen Zugangsanfrage zu einem nachgesuchten Netzwerk aus der Mehrzahl drahtloser lokaler Netzwerke nach einer ihm erteilten früheren Zugangsadresse für das nachgesuchte Netzwerk in dem Zuordnungs-Speicher sucht, und das mobile Kommunikationsendgerät bei Auffinden der früheren Zugangsadresse für das nachgesuchte Netzwerk diese in den Anmeldungs-Speicher schreibt und für einen Anmeldevorgang aussendet.

Weitere Ausgestaltungen eines solchen Verfahrens sind in den Unteransprüchen 10 bis 13 beschrieben. Die Merkmale dieser Verfahrensansprüche sind bereits anhand der Diskussion des oben beschriebenen mobilen Kommunikationsendgerätes erläutert worden.

Ausführungsbeispiele der Erfindung werden nachfolgend noch näher erläutert.

Der Benutzer eines Laptops als Beispiel eines mobilen Kommunikationsendgerätes, das mit einer sog. WLAN-Karte ausgestattet sein kann, kontaktiert ein WLAN-Netzwerk A. Im Rahmen des dann stattfindenden Anmeldevorgangs wird dem mobilen Kommunikationsendgerät von einem DHCP-Server die IP-Adresse a.b.c.d. zugewiesen. Das mobile Kommunikationsendgerät weist einen Anmeldungs-Speicher auf, in dem die dem mobilen Kommunikationsendgerät zuletzt zugewiesene IP-Adresse abgelegt ist.

Der Speicherwert des gesonderten Speichers für die letztvergebene IP-Adresse wird aufgrund des Anmeldevorgangs überschrieben, so dass er nunmehr die Zugangsadresse a.b.c.d. enthält. Zusätzlich zu diesem Überschreibevorgang wird in dem mobilen Kommunikationsendgerät in einem Zuordnungs-Speicher die Information gespeichert: "Netzwerk A: letzte IP-Zugangsadresse = a.b.c.d".

Wenn nun der Benutzer des Laptops den Empfangsbereich des WLAN-Netzwerks A verlässt und in den Bereich eines WLAN-Netzwerks B eintritt, passiert folgendes: Das WLAN-Netzwerk B wird kontaktiert. Das mobile Kommunikationsendgerät prüft zunächst den Zuordnungs-Speicher und stellt fest, dass keinerlei Anmeldeinformationen für das Netzwerk B vorhanden sind. In diesem Fall benutzt der DHCP-Stack die letzte bekannte Zugangsadressinformation (aus dem Anmeldespeicher), nämlich a.b.c.d., um eine Anmeldung in dem Netzwerk B herbeizuführen. Für das Netzwerk B ist diese Zugangsadresse jedoch unbekannt, so dass es dem mobilen Kommunikationsendgerät über den DHCP-Server eine für das Netzwerk B spezifische Zugangsadresse zuweist, nämlich 12.34.56.78. Dieser Wert wird in den Anmelde-Speicher für die zuletzt vergebene IP-Adresse eingelesen und damit der vorhergehende Wert für das Netzwerk A überschrieben. Dabei kann es vorkommen, dass einige von dem Benutzer über den Zugang des Netzwerkes A genutzte Dienste von dem Netzwerk B nicht mehr bereitgestellt werden, so dass nur noch diejenigen Dienste weitergenutzt werden können, die sowohl von dem Netzwerk A als auch von dem Netzwerk B unterstützt werden. Auch von dem Netzwerk B nicht unterstütze, jedoch bei Wiedereintritt in das Sendegebiet des Netzwerks A noch gültige Dienste können mit dieser Zugangsadresse wieder aufgenommen werden.

Wenn nun das mobile Kommunikationsendgerät zurück in das Gebiet des WLAN-Netzwerks A gelangt, wird dieses Netzwerk A erneut kontaktiert. Die in dem Netzwerk B aufrecht erhaltenen Dienste können prinzipiell mit der für das Netzwerk A vergebenen Zugangsadresse a.b.c.d. erneut genutzt werden.

Bei Eintritt in das Gebiet des Netzwerks A prüft der DHCP-Stack nach Erkennung des Netzwerkes A, ob in dem Zuordnungs-Speicher für dieses Netzwerk eine frühere Zugangsadresse, nämlich die Adresse a.b.c.d., vorhanden ist. Der dafür erforderliche Suchvorgang basiert auf Informationen in dem Zuordnungs-Speicher. Dieser enthält für jedes bereits früher nachgesuchte drahtlose lokale Netzwerk die damals vergebene IP-Adresse in Kombination mit einer Information, die das betreffende Netzwerk wiedergibt. Diese Information kann, beispielsweise basierend auf einem GPS-System, eine Ortsinformation sein. Alternativ oder zusätzlich können die früher vergebenen IP-Adressen auch in Kombination mit einer "SSID" eines WLAN-Netzwerkes oder dessen "MAC"-Adresse gespeichert sein. Nach Auffinden dieser Adresse wird der Inhalt des Anmeldungs-Speichers für die letzte vergebene IP-Adresse mit dem Wert "a.b.c.d." überschrieben, d. h. der Speicherwert wird von "12.34.56.78" zu "a.b.c.d." geändert und an dem DHCP-Server des Netzwerks A übersandt. Der DHCP-Server weist dem mobilen Kommunikationsendgerät dann die früher bereits genutzte Zugangsadresse für das Netzwerk A zu, so dass kein Bedarf besteht, Kommunikationsverbindungen neu zu organisieren. Dies bedeutet selbstverständlich eine Zeitersparnis für den Benutzer des Laptops.

Die gerade erläuterte Ausführungsform des Servers ist besonders nützlich für Multimode-Kommunikationsendgeräte, d. h. solche, die simultan sowohl mit dem Netzwerk A als auch mit dem Netzwerk B Kommunikationsverbindungen unterhalten. Solche Multimode-Kommunikationsendgeräte können insbesondere mit mehreren Luftschnittstellen ausgestattet sein, die verschiedene Mobilfunkstandards unterstützen. Beispiele hierfür sind WLAN-, Bluetooth-, GSM- und UMTS-Dienste. Befindet sich das mobile Kommunikationsendgerät in Reichweite mehrerer solcher Mobilfunknetzwerke, so kann durch geeigneten Zugriff auf die jeweils früher zugeordnete Zugangsadresse in einfacherer Art und Weise zwischen den verschiedenen Netzwerken umgeschaltet werden.

Bei einem zweiten Ausführungsbeispiel der Erfindung kontaktiert der Benutzer wiederum das WLAN-Netzwerk A und erhält über den DHCP-Server die Zugangsadresse a.b.c.d., so dass in dem Anmeldungs-Speicher für die letzte vergebene IP-Adresse der Wert "a.b.c.d." abgelegt ist.

Der Benutzer wünscht, einen "VoIP"-Ruf unter Verwendung einer GPRS-Schnittstelle seines Laptops zu tätigen, und zwar unter Vermittlung durch ein GPRS-Netzwerk C. Das Laptop richtet über den DHCP-Server eine Anfrage an das Netzwerk C zur Erteilung einer für den Ruf nutzbaren IP-Zugangsadresse. Das mobile Kommunikationsendgerät benutzt den Wert in dem Anmelde-Speicher für die zuletzt vergebene IP-Adresse, hier a.b.c.d. für das WLAN-Netzwerk A, um eine Kommunikationsverbindung zu dem Netzwerk C aufzubauen. Das Netzwerk C kann diese IP-Adresse nicht verarbeiten und weist über seinen DHCP-Server dem mobilen Kommunikationsendgerät, nämlich dem Laptop, die für das Netzwerk C gültige IP-Adresse "90.23.56.89" zu. Dieser Adressenzuweisungsvorgang schlägt sich darin nieder, dass in dem Anmelde-Speicher für die zuletzt vergebene IP-Adresse nunmehr der Wert "90.23.56.89" abgelegt wird und den dort bisher vorhandenen Wert "a.b.c.d." ersetzt. In diesem Zuge wird in dem Zuordnungs-Speicher für früher vergebene IP-Adressen hinterlegt, dass für das GPRS-Netzwerk C die letzte vergebene IP-Zugangsadresse den Wert "90.23.56.89" besitzt.

Der Zuordnungs-Speicher enthält damit nunmehr die folgenden Informationen:
Netzwerk A: letzte IP-Zugangsadresse = "a.b.c.d" und
Netzwerk C: letzte IP-Zugangsadresse = "90.23.56.89".

Wenn nun die für das WLAN-Netzwerk A vergebene, temporäre Zugangsadresse "a.b.c.d." abläuft, richtet der DHCP-Stack des mobilen Kommunikationsendgerätes automatisch eine Anfrage an das WLAN-Netzwerk A zur Vergabe einer neuen IP-Zugangsadresse, beispielsweise c.d.e.f..

Dem mobilen Kommunikationsendgerät ist jedoch bekannt, dass für das Netzwerk A die letzte vergebene IP-Adresse den Wert "a.b.c.d." hat, so dass in dem Speicher des DHCP-Servers der Wert "c.d.e.f." durch den Wert "a.b.c.d." ersetzt wird.

Der DHCP-Server im WLAN-Netzwerk A kann diese Zugangsadresse neu vergeben, als wenn die Verbindung zu dem GPRS-Netzwerk C nie stattgefunden hätte, so dass es nicht erforderlich ist, die Nutzung irgendeines Dienstes abzubrechen oder neu zu organisieren. Auf diese Weise wird die Benutzerfreundlichkeit erheblich verbessert.

Den vorstehenden Ausführungsbeispielen ist gemeinsam, dass die Zugangsdresse, die für die "angeforderte Zugangsadresse" einer DHCP-DISCOVER oder DHCP-REQUEST-Mitteilung gewählt wird, nicht notwendiger Weise die letzte IP-Zugangsadresse ist, die von dem DHCP-Stack verarbeitet worden ist. Aufgrund dessen ergeben sich Vorteile für die Anwendungsfälle mobiler Kommunikationsendgeräte und/oder Multimode-Kommunikationsendgeräte. Ähnliche Vorgehensweisen können auch bei anderen Verfahren zur Zugangsadress-Zuweisung benutzt werden.

## Patentansprüche

1. Mobiles Kommunikationsendgerät zur Verwendung in einer Mehrzahl drahtloser lokaler Netzwerke, das einen Anmeldungs-Speicher aufweist, in dem eine für einen neuen Anmeldungsvorgang vorgesehene Zugangsadresse hinterlegt ist,
**dadurch gekennzeichnet, dass**
in einem Zuordnungs-Speicher des mobilen Kommunikationsendgerätes Informationen darüber gespeichert sind, welche Zugangsadressen das mobile Kommunikationsendgerät in welchem der Mehrzahl drahtloser lokaler Netzwerke bei früheren Anmeldevorgängen erhalten hat, es derart ausgebildet ist, dass es aufgrund einer neuen Zugangsanfrage zu einem nachgesuchten Netzwerk aus der Mehrzahl drahtloser lokaler Netzwerke nach einer ihm erteilten früheren Zugangsadresse für das nachgesuchte Netzwerk sucht, und
es derart ausgebildet ist, dass es bei Auffinden der früheren Zugangsadresse für das nachgesuchte Netzwerk diese in den Anmeldungs-Speicher schreibt und für einen Anmeldevorgang aussendet.

2. Kommunikationsendgerät nach Anspruch 1,
**dadurch gekennzeichnet, dass**
es derart ausgebildet ist, dass es in dem Fall, wenn eine Zugangsadresse für eines der Mehrzahl drahtloser lokaler Netzwerke ungültig wird, von dem der Zugangsadresse zugehörigen drahtlosen lokalen Netzwerk eine neue Zugangsadresse anfordert.

3. Kommunikationsendgerät nach einem der Ansprüche 1 oder 2,
**dadurch gekennzeichnet, dass**
es zum Unterstützen einer Mehrzahl Kommunikationsverbindungen zu verschiedenen der Mehrzahl drahtloser lokaler Netzwerke ausgebildet ist.

4. Kommunikationsendgerät nach einem der Ansprüche 1 bis 3,
**dadurch gekennzeichnet, dass**
es als DHCP-Client ausgebildet ist und der Anmeldungs-Speicher eine letzte von einem der Mehrzahl drahtloser lokaler Netzwerke an das mobile Kommunikationsendgerät vergebene Zugangsadresse enthält sowie durch die frühere Zugangsadresse des nachgefragten drahtlosen lokalen Netzwerks überschreibbar ist.

5. Kommunikationsendgerät nach einem der Ansprüche 1 bis 4,
**dadurch gekennzeichnet, dass**
in dem Kommunikationsendgerät für die Mehrzahl drahtloser lokaler Netzwerke zusätzlich Sicherheitsinformationen und/oder Netzwerkinformationen gespeichert sind, die mit der Zugangsadresse verknüpft sind.

6. Kommunikationsendgerät nach einem der Ansprüche 1 bis 5,
**dadurch gekennzeichnet, dass**
in dem Zuordnungs-Speicher den früher erteilten Zugangsadressen eine das zugehörige drahtlose lokale Netzwerk repräsentierende Information zugeordnet ist.

7. Kommunikationsendgerät nach Anspruch 6,
**dadurch gekennzeichnet, dass**
die das drahtlose lokale Netzwerk repräsentierende Information eine Ortsinformation ist.

8. Kommunikationsendgerät nach Anspruch 6,
**dadurch gekennzeichnet, dass**
die das drahtlose lokale Netzwerk repräsentierende Information eine "SSID" und/oder eine MAC-Adresse ist.

9. Verfahren zum Verwalten von Anmeldungsinformationen bei einem mobilen Kommunikationsendgerät zum Aufbau von Kommunikationsverbindungen in einer Mehrzahl drahtloser lokaler Netzwerke, wobei für einen neuen Anmeldungsvorgang aus einem Anmeldungs-Speicher eine Zugangsadresse ausgelesen wird,
**dadurch gekennzeichnet, dass**
in einem Zuordnungs-Speicher des mobilen Kommunikationsendgerätes Informationen darüber gespeichert werden, welche Zugangsadressen das mobile Kommunikationsendgerät in welchem der Mehrzahl drahtloser lokaler Netzwerke bei früheren Anmeldevorgängen erhalten hat, das mobile Kommunikationsendgerät aufgrund einer neuen Zugangsanfrage zu einem nachgesuchten Netzwerk aus der Mehrzahl drahtloser lokaler Netzwerke nach einer ihm erteilten früheren Zugangsadresse für das nachgesuchte Netzwerk in dem Zuordnungs-Speicher sucht, und
das mobile Kommunikationsendgerät bei Auffinden der früheren Zugangsadresse für das nachgesuchte Netzwerk diese in den Anmeldungs-Speicher schreibt und für einen Anmeldevorgang aussendet.

10. Verfahren nach Anspruch 9,
**dadurch gekennzeichnet, dass**
das mobile Kommunikationsendgerät in dem Fall, wenn eine Zugangsadresse für eines der Mehrzahl drahtloser lokaler Netzwerke ungültig wird, von dem der Zugangsadresse zugehörigen drahtlosen lokalen Netzwerk eine neue Zugangsadresse anfordert.

11. Verfahren nach einem der Ansprüche 9 oder 10,
**dadurch gekennzeichnet, dass**
das mobile Kommunikationsendgerät eine Mehrzahl Kommunikationsverbindungen zwischen einem der Mehrzahl drahtloser lokaler Netzwerke zu dem mobilen Kommunikationsendgerät unter derselben Zugangsadresse unterstützt.

12. Verfahren nach einem der Ansprüche 9 bis 11,
**dadurch gekennzeichnet, dass**
das mobile Kommunikationsendgerät als DHCP-Client ausgebildet wird, in dem Anmeldungs-Speicher eine letzte von einem der Mehrzahl drahtloser lokaler Netzwerke an das mobile Kommunikationsendgerät vergebene Zugangsadresse gespeichert wird und diese Zugangsadresse bei Auffinden der früheren Zugangsadresse des nachgefragten drahtlosen lokalen Netzwerks überschrieben wird.

13. Verfahren nach einem der Ansprüche 9 bis 12,
**dadurch gekennzeichnet, dass**
in dem Kommunikationsendgerät für die Mehrzahl drahtloser lokaler Netzwerke zusätzlich Sicherheitsinformationen und/oder Netzwerkinformationen gespeichert werden, die mit der Zugangsadresse verknüpft sind.

## Claims

1. Mobile communications terminal for use in a plurality of wireless local networks, which features a log on memory in which an access address provided for a new log on process is stored, **characterised in that**
information is stored in an allocation memory of the mobile communications terminal about which access addresses the mobile communications terminal has received in which of the plurality of wireless local networks in previous log on processes, it is embodied such that, as a result of a new access request for a network sought from the plurality of wireless local networks, it searches for an earlier access address issued to it for the sought network, and
it is embodied such that, on finding the earlier access address for the sought network, it writes this address into the log on memory and transmits it for a log on process.

2. Communications terminal according to claim 1,
**characterised in that**
it is embodied such that, in the event of an access address being invalid for one of the plurality of wireless local networks, it requests a new access address from the wireless local network associated with the access address.

3. Communications terminal according to one of claims 1 or 2,
**characterised in that**
it is embodied to support a plurality of communication connections to different networks of the plurality of wireless local networks.

4. Communications terminal according to one of claims 1 to 3,
**characterised in that**
it is embodied as a DHCP client and the log on memory contains a last access address issued by one of the plurality of wireless local networks to the mobile communications terminal and also is able to be overwritten by the earlier access address of the wireless local network sought.

5. Communications terminal according to one of claims 1 to 4,
**characterised in that**
additional security information and/or network information which is linked to the access address is stored for the plurality of wireless local networks in the communications terminal.

6. Communications terminal according to one of claims 1 to 5,
**characterised in that**
information representing the associated wireless local network is allocated in the allocation memory to the earlier access addresses issued.

7. Communications terminal according to claim 6,
**characterised in that**
the information representing the wireless local network is position information.

8. Communications terminal according to claim 6,
**characterised in that**
the information representing of the wireless local network is an "SSID" and/or a MAC address.

9. Method for administering log on information in a mobile communications terminal for setting up communications links in a plurality of wireless local networks, wherein an access address is read out from a log on memory for a new log on process,
**characterised in that**
information is stored in an allocation memory of the mobile communications terminal about which access addresses the mobile communications terminal has received in which of the plurality of wireless local networks during previous log on processes, the mobile communications terminal, as a result of a new access request to a sought network of the plurality of wireless local networks, looks for an earlier access address issued to it for the sought network in the allocation memory, and the mobile communications terminal, on finding the earlier access address for the sought network, writes this into the log on memory and transmits it for a log on process.

10. Method according to claim 9,
**characterised in that**
the mobile communications terminal, in the event of an access address being invalid for one of the plurality of wireless local networks, requests a new access address from the wireless local network associated with the access address.

11. Method according to one of claims 9 or 10,
**characterised in that**
the mobile communications terminal supports a plurality of communications links between one of the plurality of wireless local networks and the communications terminal under the same access address.

12. Method according to one of claims 9 to 11,
**characterised in that**
the mobile communications terminal is embodied as a DHCP client, a last access address issued by one of the plurality of wireless local networks to the mobile communications device is stored in the log on memory, and this access address is overwritten when the earlier access address of the wireless local network sought is found.

13. Method according to one of claims 9 to 12,
**characterised in that**
security information and/or network information which is linked with the access address is additionally stored for the plurality of wireless local networks in the communications terminal.

## Revendications

1. Terminal de communication mobile pour une utilisation dans une pluralité de réseaux locaux sans fil, comportant une mémoire de connexion dans laquelle est déposée une adresse d'accès prévue pour une nouvelle opération de connexion, **caractérisé en ce que** sont stockées, dans une mémoire d'affectation du terminal de communication mobile, des informations indiquant quelles adresses d'accès le terminal de communication mobile a reçues dans quel réseau local sans fil de la pluralité de réseaux locaux sans fil lors d'opérations de connexion antérieurs, **en ce qu'**il est réalisé de manière telle qu'il cherche, sur la base d'une nouvelle demande d'accès à un réseau recherché de la pluralité de réseaux locaux sans fil, une adresse d'accès antérieure, qui lui a été attribuée, pour le réseau recherché et **en ce qu'**il est réalisé de manière telle que, lorsqu'est trouvée l'adresse d'accès antérieure pour le réseau recherché, il écrit celle-ci dans la mémoire de connexion et l'émet pour une opération de connexion.

2. Terminal de communication selon la revendication 1, **caractérisé en ce qu'**il est réalisé de telle sorte que, si une adresse d'accès pour un réseau local sans fil de la pluralité de réseaux locaux sans fil perd sa validité, il demande une nouvelle adresse d'accès au réseau local sans fil associé à l'adresse d'accès.

3. Terminal de communication selon l'une des revendications 1 ou 2, **caractérisé en ce qu'**il est réalisé pour supporter une pluralité de liaisons de communication vers différents réseaux locaux sans fil de la pluralité de réseaux locaux sans fil.

4. Terminal de communication selon l'une des revendications 1 à 3, **caractérisé en ce qu'**il est réalisé en tant que client DHCP et **en ce que** la mémoire de connexion contient une dernière adresse d'accès attribuée au terminal de communication mobile par un réseau local sans fil de la pluralité de réseaux locaux sans fil et est réinscriptible par l'adresse d'accès antérieure du réseau local sans fil demandé.

5. Terminal de communication selon l'une des revendications 1 à 4, **caractérisé en ce que** sont en outre stockées, dans le terminal de communication pour la pluralité de réseaux locaux sans fil, des informations de sécurité et/ou des informations de réseau qui sont associées à l'adresse d'accès.

6. Terminal de communication selon l'une des revendications 1 à 5, **caractérisé en ce qu'**est associée aux adresses d'accès attribuées antérieurement, dans la mémoire d'affectation, une information représentant le réseau local sans fil associé.

7. Terminal de communication selon la revendication 6, **caractérisé en ce que** l'information représentant le réseau local sans fil est une information locale.

8. Terminal de communication selon la revendication 6, **caractérisé en ce que** l'information représentant le réseau local sans fil est un « SSID » et/ou une adresse MAC.

9. Procédé de gestion d'informations d'accès dans un terminal de communication mobile pour établir des liaisons de communication dans une pluralité de réseaux locaux sans fil, une adresse d'accès étant extraite d'une mémoire de connexion pour une nouvelle opération de connexion, **caractérisé en ce que** sont sauvegardées, dans une mémoire d'affectation du terminal de communication mobile, des informations indiquant quelles adresses d'accès le terminal de communication mobile a reçues dans quel réseau local sans fil de la pluralité de réseaux locaux sans fil lors d'opérations de connexion antérieures, **en ce que** le terminal de communication mobile cherche, sur la base d'une nouvelle demande d'accès à un réseau recherché de la pluralité de réseaux locaux sans fil, une adresse d'accès antérieure, qui lui a été attribuée, pour le réseau recherché et **en ce que** le terminal de communication mobile, lorsqu'est trouvée l'adresse d'accès antérieure pour le réseau recherché, écrit celle-ci dans la mémoire de connexion et l'émet pour une opération de connexion.

10. Procédé selon la revendication 9, **caractérisé en ce que** le terminal de communication mobile, si une adresse d'accès pour un réseau local sans fil de la pluralité de réseaux locaux sans fil perd sa validité, demande une nouvelle adresse d'accès au réseau local sans fil associé à l'adresse d'accès.

11. Procédé selon l'une des revendications 9 ou 10, **caractérisé en ce que** le terminal de communication mobile supporte une pluralité de liaisons de communication entre un réseau local sans fil de la pluralité de réseaux locaux sans fil et le terminal de communication mobile sous la même adresse d'accès.

12. Procédé selon l'une des revendications 9 à 11, **caractérisé en ce que** le terminal de communication mobile est réalisé en tant que client DHCP, **en ce qu'**une dernière adresse d'accès attribuée par un réseau local sans fil de la pluralité de réseaux locaux sans fil au terminal de communication mobile est sauvegardée dans la mémoire de connexion et **en ce que** cette adresse d'accès est écrasée lorsqu'est trouvée l'adresse d'accès antérieure du réseau local sans fil demandé.

13. Procédé selon l'une des revendications 9 à 12, **caractérisé en ce que** sont en outre sauvegardées, dans le terminal de communication, pour la pluralité de réseaux locaux sans fil, des informations de sécurité et/ou des informations de réseau qui sont associées à l'adresse d'accès.
